# EUROPEAN PATENT APPLICATION

(11) **EP 4 400 208 A1**
(43) Date of publication of application: **17.07.2024**
(21) Application number: 24151249.0
(22) Date of filing: 10.01.2024
(51) Int. Cl.: B01J 2/12, C05D 1/04

(54) **A METHOD OF PROCESSING MATERIAL USING A BALLING MACHINE**

(30) Priority: 11.01.2023 GB 202300433
(71) Applicant: South Wales Minerals & Mining Ltd, Cardiff CF23 8AA (GB)
(72) Inventor: LLOYD, Owain, Cardiff, CF23 8AA (GB)
(74) Representative: Abel & Imray LLP

(57) **Abstract**

A method of processing a material using a balling machine (100). The balling machine comprises: a rotatable tube (102) arranged to receive a material therein and to rotate so as to cause the material to form balls; and a scraper (138) arranged to control the build-up of the material on an inside surface of the rotatable tube. The scraper comprises a scraping edge having a plurality of teeth (146) and a plurality of recesses (148) between the teeth. The arrangement of the teeth and the recesses permit the material to build-up into a plurality of circumferential ridges (154) on the inside surface of the rotatable tube. The inside surface of the rotatable tube has been coated with a coating material (152) which has been scraped by the scraper so as to form a layer of coating material comprising a plurality of circumferential ridges on the inside surface of the rotatable tube. The method comprises the steps of: balling a process material, which is different from the coating material, by providing the process material into the rotatable tube which has been coated with the coating material, and rotating the rotatable tube so as to form balls of the process material.

## Description

### Field of the Invention

The present invention concerns a method of processing a material using a balling machine. The invention also concerns a method of manufacturing a fertiliser product using a balling machine, a balling machine, and a scraper for a balling machine.

### Background of the Invention

International patent application WO 2017/125751 A1 discloses a balling machine for use in the manufacture of aggregate. The balling machine comprises an elongate rotatable tube. Material is fed into the rotatable tube and the rotation of the rotatable tube lifts the material up the sides. When the material eventually falls back down, the material rolls and tumbles. This motion causes the material to agglomerate and eventually form balls of the material. As the balling machine is used, a certain amount of the material may build-up on the internal surface of the rotatable tube. A scraper is provided to control how much material can build-up.

WO 2017/125751 A1 describes that the scraper may be arranged to allow the material to form into circumferential ridges (rings) on the internal surface of the rotatable tube. The circumferential ridges of material may increase the contact area and friction between the material being balled and the internal surface of the tube. This can help lift the material higher up the sides of the tube and encourage the material to roll down the side rather than sliding down in one mass. This may result in a generally more efficient balling process as the material more readily forms into balls of a satisfactory size.

International patent application WO 2020/104780 A1 also discloses a balling machine comprising a scraper which is arranged to allow material to form into circumferential ridges on the internal surface of the rotatable tube. The scraper of WO 2020/104780 A1 is arranged so as to permit at least two of the circumferential ridges to build-up to different maximum heights. This can help control the progress of the balls through the rotatable tube.

It has been found that the apparatus and methods described in the above mentioned patent applications are not optimal for balling certain materials, such as materials formed of relatively fine particles, for example fertiliser. Fertiliser can be a difficult material to form into balls/pellets. The binder used in the balling/pelletising process typically needs to be water soluble and non-toxic. An example binder is starch. As a result, the material does not bind together as easily as other materials, where stronger cementitious material binders can be used. When producing fertiliser pellets, the moisture content also needs to be carefully controlled. Furthermore, the pellets typically need to be produced in a relatively narrow range of sizes. Generally speaking, fertiliser pellets need to be sized in the range 2-4mm so that they can be efficiently spread on fields by agricultural spreaders.

Fertiliser pellets have traditionally been formed in a disc pelletiser. This way of forming fertiliser pellets tends to be relatively slow, and hence the daily yield of fertiliser pellets from such a process is limited. It would be desirable to provide a process which can form fertiliser pellets in a more efficient manner.

The present invention seeks to mitigate the above-mentioned problems. Alternatively or additionally, the present invention seeks to provide an improved method of processing a material using a balling machine, an improved method of manufacturing a fertiliser product using a balling machine, an improved balling machine, and/or an improved scraper for a balling machine.

### Summary of the Invention

The present invention provides, according to a first aspect, a method of processing a material using a balling machine.

The balling machine comprises: a rotatable tube arranged to receive a material therein and to rotate so as to cause the material to form balls (i.e. pellets); and a scraper arranged to control a build-up of the material on an inside surface of the rotatable tube, the scraper comprising a scraping edge. The scraping edge comprises a plurality of teeth and a plurality of recesses, the recesses being between the teeth. The arrangement of the teeth and the recesses permit the material to build-up into a plurality of circumferential ridges on the inside surface of the rotatable tube.

The inside surface of the rotatable tube has been coated with a coating material. The coating material has been scraped by the scraper so as to form a layer of coating material comprising a plurality of circumferential ridges on the inside surface of the rotatable tube.

The method comprises the steps of: balling a process material, which is different from the coating material, by providing the process material into the rotatable tube which has been coated with the coating material, and rotating the rotatable tube so as to form balls of the process material.

The method may comprise a step of coating the inside surface of the rotatable tube by providing the coating material into the rotatable tube and rotating the rotatable tube. The coating material builds-up on the inside surface (i.e. internal surface) of the rotatable tube and is scraped by the scraper. The scraper controls the build-up of the coating material such that the coating material forms the layer of coating material comprising the plurality of circumferential ridges on the inside surface of the rotatable tube. The method may comprise a step of, prior to providing the coating material into the rotatable tube, wetting (e.g. with water) the inside surface of the rotatable tube, (such that the inside surface of the rotatable tube is wet when the coating material is provided into the rotatable tube).

Coating the inside surface of the rotatable tube may be beneficial as it allows the plurality of circumferential ridges to be formed inside the rotatable tube in situations where the process material (which comprises the material it is desired to form into balls) is not itself capable of building-up to a sufficient thickness to form, or at least form to the desired size, the plurality of circumferential ridges. This may be, for example, because the process material is not sticky enough to adhere sufficiently well to the inside surface of the rotatable tube, and/or because the process material cannot adequately maintain a circumferential ridge shape. Coating the inside surface of the rotatable tube also may be beneficial in situations where the material to be balled is capable of building-up on the inside surface to form the plurality of circumferential ridges, but this does not happen sufficiently quickly. As mentioned above, the presence of circumferential ridges on the inside surface of the rotatable tube may increase the contact area and friction between the process material and the internal surface of the tube, which may result in a generally more efficient balling process.

The inside surface of the rotatable tube may be provided with at least one projection, preferably a plurality of projections. The coating material may build-up on the projections. The projections may, for example, have been welded onto the inside of the rotatable tube. The projections may provide a surface structure which helps the coating material build-up and stay on the inside surface of the rotatable tube. The scraper may be arranged to permit the coating material to build up to a thickness which is greater than the height of the projections, for example such that the projections are not visible once the layer of coating material has built up.

The projections may be in the form of elongate projections. The elongate projections may extend lengthways along the rotatable tube. The elongate projections may extend partway or substantially fully along the length of the rotatable tube. The projections may be parallel to the longitudinal axis of the rotatable tube, or may be at a (non-zero) angle to the longitudinal axis. The elongate projections may be in the form of bars attached to the inside surface of the rotatable tube. The elongate projections may, for example, have a rectangular cross section. The elongate projections may be spaced substantially equally around the circumference of the rotatable tube. There may be at least one, at least two, at least three, or at least four elongate projections.

The projections may be in the form of spot projections. The spot projections may comprise a (non-elongate) piece of material affixed to the inside surface of the rotatable tube. The spot projections may, for example, comprise a deposit (e.g. a mound, nodule) of weld material on the inside surface of the rotatable tube. The spot projections may be distributed across the inside surface of the rotatable tube. There may be at least ten, at least twenty, or at least thirty spot projections. The inside surface of the rotatable tube may be provided with both elongate and spot projections.

The coating material may comprise a cementitious material, for example Portland cement. The coating material may comprise an aggregate, for example crushed limestone. The aggregate may have a particle size of up to 4mm, up to 5mm, up to 6mm, or up to 10mm. The aggregate may be a coarse aggregate. It has been found that the presence of aggregate in the coating material may increase the strength of the coating. This may help reduce the chance of the coating material breaking off. It has also been found that the presence of aggregate in the coating material may make the surface of the layer of coating material rougher, which may increase the friction between the coating material and the process material when the process material is being balled. This may help lift the process material higher up the side of the rotatable tube. Lifting the process material higher up the side of the rotatable tube may result in greater compaction of the process material and more collisions when the process material rolls and tumbles downwards. This may result in greater strength of the balls (pellets) of the process material and/or make the balling process more efficient.

The composition of the coating material may depend on the composition of the process material. Preferably, the coating material is coarser than the process material. In an example embodiment, the coating material may comprise four parts `6 mm to dust' limestone to one part Ordinary Portland Cement (OPC) Type 1 cement. This may be understood to be a type of 4:1 screed mix. The limestone may be crushed limestone.

There may be a step of allowing the layer of coating material to dry before providing the process material into the rotatable tube. The coating material may therefore have dried and/or solidified prior to the process material being provided into the rotatable tube. Therefore, it may be that the coating material is not itself formed into balls with the process material. It may be that the coating material is not mixed with the process material as the process material forms into balls inside the rotatable tube.

There may be a step of drying the balls (pellets) of process material. The step of drying the balls of process material may comprise providing the balls of process material into a heated rotatable drum. The balls of the process material may be graded by size. Balls which are above an upper threshold size and/or below a lower threshold size may be removed. The balls of the process material may be graded prior to drying. The under and/or oversized balls of the process material may be reprocessed in the rotatable tube.

When balling the process material, a layer of process material may build-up on top of the layer of coating material. When balling the process material, the process material may be scraped by the scraper. The scraper may control the build-up of the process material such that the layer of process material is formed into a plurality of circumferential ridges inside of the rotatable tube.

It may be that during the step of balling the process material, the process material builds-up inside of the rotatable tube and is scraped by the scraper; wherein the scraper controls the build-up such that the process material forms a plurality of circumferential ridges on the inside of the rotatable tube.

The process material may comprise a fertiliser. The fertiliser may be an organic fertiliser. The fertiliser may be an inorganic fertiliser. The fertiliser may comprise nitrogen. The fertiliser may comprise polyhalite. For the avoidance of doubt, a fertiliser is any material of natural or synthetic origin that is applied to soil or to plant tissues to supply one or more plant nutrients.

It has been found that the consistency of some fertilisers, for example polyhalite fertiliser, mean they do not readily form into circumferential ridges on the inside surface of the rotatable tube. The present invention may therefore provide a more efficient process of balling (i.e. pelletising) such fertilisers by providing a rotatable tube with the circumferential ridges preformed from coating material. In comparison using a disc pelletiser, the present invention may provide a greater rate of fertiliser pellet production.

The process material may comprise a metallurgical waste material. The metallurgical waste material may be a metallurgical waste product (or by-product) of an ironmaking and/or a steelmaking process, for example the Basic Oxygen Steelmaking (BOS) process. The metallurgical waste material may be, or have been, in the form of a slurry. The metallurgical waste material may comprise, for example, at least one of: waste oxides, flue dust, blast furnace flue dust, BOS plant flue dust, sludge, Hot Mill sludge, Basic Oxygen Steelmaking (BOS) slurry, slag, nautilus, and/or betsi.

The metallurgical waste material may be a metallurgical waste product (or by-product) obtained from a process of mining a metal ore and/or extracting a metal from a metal ore (e.g. smelting). The metallurgical waste material may comprise metal ore, optionally dust and/or fines of metal ore. The metallurgical waste material may be obtained from a dust extraction system operated during said mining and/or extracting. The dust extracted by the dust extraction system may have a particle size of less than 50 microns, less than 20 microns, or less than 10 microns. The metal may, for example, be nickel.

The metallurgical waste materials may comprise iron (iron containing metallurgical waste material), which may be in the form of iron oxide. The metallurgical waste material may have a mean iron content of between 40% and 70%, or 50% and 60% by weight. The process material may have an iron content of between 40% and 70% by weight.

The process material may comprise steelmaking slag, ironmaking slag, waste material from quarrying, waste material from construction, waste material from demolition, waste material from waste recycling, and/or landfill leachate.

The process material may comprise a binder material. The binder material may be selected in dependence on the particular material it is desired to ball (pelletise). The skilled person will be capable of making such a selection, and also determining an appropriate quantity of the binder material.

The binder material may be water-soluble. The binder material may comprise a polymer, such as a water-soluble polymer, such as starch, such as potato starch. Such binder materials may be used in conjunction with fertiliser.

The binder material may comprise at least one of the following: a cementitious material (e.g. Portland cement), recycled steelwork fines, recycled ashes, and/or dusts from power stations. Such binder materials may be used in conjuction with metallurgical waste material(s).

The process material may comprise an absorber material and/or a liquid, such as water. The absorber material may absorb and retain at least some of the liquid present in the material to be balled. The absorber material and/or the liquid may be selected in dependence on the particular material it is desired to ball (pelletise). The skilled person will be capable of making such a selection, and also determining an appropriate quantity of the absorber material and/or the liquid.

The process material may be a particulate material. It may be that more than 90% by mass of the particles have a size of between 1 micron and 6mm, or between 1 micron and 1mm. The size may be measured by sieve analysis. Sieve analysis may comprise determining particle size by passing the process material through a sieve having a mesh of known dimensions. The size may be the mean diameter of the particle. The process material may be in the form of sludge and/or slurry. The sludge and/or slurry may comprise the particles mixed with a liquid, for example water.

The method may comprise a step of mixing the process material (and/or coating material) in a mixer prior to providing the process material (and/or coating material) into the rotatable tube. The process material (and/or coating material) may be mixed using a mixer comprising a mixing chamber, wherein a rotary shaft bearing mixing elements rotates within the mixing chamber to mix the process material. The process material (and/or coating material) may be mixed using a paddle mixer, i.e. a mixer comprising a rotatable shaft to which one or more mixing elements in the form of paddles are mounted thereto. The process material (and/or coating material) may be mixed using a granulator. In embodiments, an example of a suitable mixer is an Eirich Intensive Mixer.

The method may comprise a step of adding liquid (e.g. water) to the process material whilst the process material is within the rotatable tube. The liquid may be added proximate an inlet end of the rotatable tube (i.e. the end in which the process material is provided into the rotatable tube). The liquid may be added within a first half of the rotatable tube (i.e. between the inlet end and a center of the rotatable tube). The liquid may be added within a first quarter of the rotatable tube. It has been found that the addition of liquid (e.g. water) in the rotatable tube may improve the extent to which the process material is lifted up, and rolls down, the side of the rotatable tube. The addition of liquid (e.g. water), may therefore help begin the agglomeration process.

Furthermore, it has been found that keeping the moisture content of the process material relatively low may be advantageous when the process material comprises fertilizer. When processing fertilizer, too much moisture can cause the balls to become oversized and, in some situations, the binder can be washed away. The ability to add liquid whilst the process material is in the rotatable tube may allow the process material to be provided into the rotatable tube with the minimum amount of moisture that is expected to be required for the material to form balls of the desired size. If the process material is determined (e.g. by an operator) to be too dry once the process material is within the rotatable tube, liquid can be added to increase the moisture content can be added. This avoids having to provide the process material with an excess of water from the outset, to ensure the process material definitely will agglomerate.

The balling machine may comprise a liquid input device arranged to input the liquid (e.g. water) into the rotatable tube. The liquid input device may allow liquid to be added to the process material during the balling process. The liquid input device may comprise one or more nozzles for delivering the liquid at one or more positions along the inside of the rotatable tube. The nozzles may be fed by pipes extending along the inside of the rotatable tube. The ability to add particular quantities of liquid, for example water, at certain positions in the rotatable tube may provide improved control over the particle size of the balled material.

The balling machine may comprise a solid material input unit arranged to provide solid material into the rotatable tube. The solid material input unit may, for example, comprise a conveyor and/or a screw feeder.

The scraping edge of the scraper may comprise a plurality of toothed regions and a plurality of non-toothed regions distributed along the length of the scraper, the toothed regions being spaced apart from each other by the non-toothed regions. The arrangement of the toothed regions and the non-toothed regions may permit material (e.g. the coating material and/or process material) to build-up on the inside of the rotatable tube into a (corresponding) plurality of circumferentially ridged regions (hereinafter simply referred to as "ridged regions") and a plurality of non-ridged regions distributed along the length of the rotatable tube, the ridged regions being spaced apart from each other by the non-ridged regions.

It has been found that, whist the circumferential ridges may advantageously help to lift the material higher up the side of the rotatable tube, and retain the material in the balling machine for longer, they may also act as a barrier which separates the balls from each other. Introducing regions with no circumferential ridges may lead to an increase in collisions between the balls in the balling machine. This may aid compaction of the balls, and therefore may help make the balls stronger. The increase in collisions may also have a polishing effect on the balls, whereby the balls become more rounded and smoother. The non-ridged regions may therefore also be thought of as polishing regions.

It has also been found that the combination of the ridged regions and non-ridged regions in the balling machine can, in particular, lead to a more efficient formation of balls from relatively fine process materials, such as fertiliser. Without wishing to be bound by theory, this is thought to be due to the aforementioned greater level of compaction.

In each of the toothed regions, the scraping edge comprises at least two teeth and at least one recess between the teeth. In each of the toothed regions, the scraping edge may comprise at least three teeth, at least four teeth or at least five teeth. In each of the toothed regions, the scraping edge may comprise a plurality of recesses, the recesses being between the teeth. The arrangement of the teeth and the recess(es) permit the material to build-up into the plurality of circumferential ridges on the inside surface of the rotatable tube.

The term teeth may also be taken to encompass serrations and like projections. A toothed region may be defined by a set of teeth which are regularly distributed in the lengthwise direction (i.e. along the length of the scraper). In each toothed region, the teeth may be equispaced. In each toothed region, the teeth may have the same height and/or width. In each toothed region, the recesses may be of an equal length (in the lengthwise direction). In each toothed region, the recesses may have the same depth.

In each non-toothed region, the scraping edge is without teeth such that the material does not build up into circumferential ridges on the inside surface of the rotatable tube. In each non-toothed region, the scraping edge may be straight. In each non-toothed region, the scraping edge may be straight along the whole non-toothed region. In each non-toothed region, the scraping edge may be parallel to the inside surface of the rotatable tube.

In embodiments, the scraping edge may comprise at least three, at least four, or at least five toothed regions. Accordingly, material may be permitted to build-up into at least three, at least four, or at least five ridged regions inside of the rotatable tube. In embodiments, the scraping edge may comprise least three, at least four, or at least five non-toothed regions. Accordingly, material may be permitted to build-up into at least three, at least four, or at least five non-ridged regions on the inside of the rotatable tube.

There may be the same number of toothed regions as non-toothed regions. Accordingly, there may be the same number of ridged regions as non-ridged regions. There may be one more, or one fewer, toothed region than non-toothed region. Accordingly, there may be one more, or one fewer, ridged region than non-ridged region.

The toothed regions may be positioned at substantially regular intervals along the length of the scraper and/or the rotatable tube. Similarly, the non-toothed regions may be positioned at substantially regular intervals along the length of the scraper and/or the rotatable tube.

The toothed regions and/or the non-toothed regions may extend along the scraper in a lengthways direction. Each toothed region may have a first end where it adjoins one adjacent non-toothed region, and a second end where it adjoins another adjacent non-toothed region or an end of the scraper. Each non-toothed region may have a first end where it adjoins one adjacent toothed region, and a second end where it adjoins another adjacent toothed region or an end of the scraper.

The toothed regions and the non-toothed regions may be substantially the same length. Alternatively, the length of each toothed region may be at least 25%, at least 50%, at least 75%, or at least 100% greater than the length of each non-toothed region.

The length of each non-toothed region may be at least 50%, at least 75%, or at least 100%, or at least 150% greater than the distance between the teeth in an adjacent toothed region.

The number of ridged and non-ridged regions, the respective lengths of the ridged and non-ridged regions, and/or the number of circumferential ridges in the ridged regions may have an impact on the final dimensions of the balls output from the balling machine. For example, if there are fewer ridges in the rotatable tube (e.g. as a result of fewer or shorter ridged regions), the progress of the balls though the rotatable tube may be impeded to a lesser extent, and the balls may progress more quickly through the rotatable tube. If the balls are not resident in the rotatable tube for as long, they may not grow as much and be smaller when output from the rotatable tube.

The number of ridged and non-ridged regions, the respective lengths of the ridged and non-ridged regions, and/or the number of circumferential ridges in the ridged regions may therefore be selected in dependence on the desired dimensions of the balls of process material output from the rotatable tube. It will be appreciated that, for any given application, the optimum number of ridged regions and non-ridged regions, the respective lengths of the ridged and non-ridged regions, and/or the number of circumferential ridges in the ridged regions, may depend on the dimensions of the rotatable tube and/or the composition of the process material.

The scraping edge may be arranged such that a downstream lateral side of each tooth is sloped so as to make an acute angle with respect to a longitudinal axis of the scraper, such that an upstream side of each circumferential ridge makes an acute angle with respect to the internal surface of the rotatable tube. This may slow the progress of the balls through the rotatable tube and thereby increase the residence time of the balls in the rotatable tube.

The scraping edge may be arranged such that an upstream lateral side of each tooth is sloped so as to make an obtuse angle with respect to a longitudinal axis of the scraper, such that a downstream side of each circumferential ridge makes an obtuse angle with respect to the internal surface of the rotatable tube. This may form a circumferential ridge profile which, at the bottom of the rotatable tube, slopes downwards towards the outlet end of the rotatable tube.

The scraper may extend along substantially the whole length of the rotatable tube. The scraping edge may be arranged such that the ridged regions and non-ridged regions are (collectively) provided along substantially the whole length of the rotatable tube.

The scraping edge of the scraper may be arranged such that, in each ridged region, each circumferential ridge has substantially the same maximum height and/or width.

The scraping edge of the scraper may be arranged such that, in each ridged region, the circumferential ridges have a maximum height of 20mm to 150mm, preferably 60mm to 100mm, for example 80mm. Accordingly, in each toothed region, the recesses between the teeth may have a depth of 20mm to 150mm, preferably 60mm to 100mm, for example 80mm.

The depth of a recess may be measured from a notional edge of the scraper which extends along the distal ends of the teeth. This notional edge may be parallel to the internal surface of the rotatable tube. This notional edge may be parallel to a longitudinal axis of the scraper. The notional edge may be straight. The notional edge may mark an outer boundary of the scraping edge. The depth of the recess may be measured from the lowermost point of the recess to the distal end of an adjacent tooth, preferably the depth is measured using the tooth on the up-stream side of the recess (i.e. the side closest to the end where the material is fed into the rotatable tube).

The height of a circumferential ridge may be measured from the peak of the circumferential ridge to the lowermost point of an adjacent trough, preferably the height is measured using the trough on the up-steam side of the circumferential ridge (i.e. the side closest to the end where the material is fed into the rotatable tube). The maximum height of a circumferential ridge may be considered to be the maximum height that the circumferential ridges can reach before interacting with, and thus further material being scraped away by, the scraper. Alternatively, the height of the circumferential ridges may be measured from the internal surface of the rotatable tube.

In each toothed region of the scraper, between the teeth (e.g. at the base of each recess) the scraping edge may be a first distance from the inside surface of the rotatable tube. This may permit, in each ridged region, the material to build up to a first thickness at the distal end of each circumferential ridge. In each toothed region of the scraper, the distal end of each tooth may be at a second distance from the inside surface of the rotatable tube. This may permit, in each ridged region, the material to build up to a second thickness between the circumferential ridges.

In each non-toothed region, the scraping edge may be at the first distance from the inside surface of the rotatable tube, at the second distance from the inside surface of the rotatable tube, at a distance less than the first distance from the inside surface of the rotatable tube, or at a distance between the first distance and second distance from the inside surface of the rotatable tube. This may permit, in each non-ridged region, the material to build up to the first thickness, the second thickness, a thickness less than the first thickness, or a thickness between the first thickness and the second thickness.

In the alternative, the measurement of the first distance and second distance could be taken from the notional edge of the scraper.

The scraper may be arranged to permit the circumferential ridges to build-up to a maximum height that is equal to their width. The circumferential ridges may generally have better structural integrity if their height is equal to their width. The width may be the mean width of the circumferential ridge and/or the width at the base of the circumferential ridge.

The scraper may be arranged to reciprocate. It will be appreciated that the scraper may reciprocate when coating the inside surface of the rotatable tube, and when balling the process material. The scraper may be arranged to reciprocate in a direction parallel to the longitudinal axis of the rotatable tube. The only movement of the scraper may be a lengthways reciprocation. The scraper may be in a fixed position in a plane perpendicular to the longitudinal axis of the rotatable tube. In other words, the scraper may be arranged so as not to move (e.g. rotate) about the longitudinal axis of the tube and/or not to move (e.g. rotate) about the longitudinal axis of the scraper itself.

The scraper may comprise an elongate body. The scraper may comprise mounting portions at each end for mounting the scraper in position in the rotatable tube. The mounting portions may be arranged to mount to a reciprocating drive means.

The scraping edge of the scraper may be arranged such that, in each ridged region, the circumferential ridges have a separation of 150mm to 400mm, preferably 180mm to 250mm, for example 200mm. In the case of a reciprocating scraper, the separation between the circumferential ridges may be a function of the pitch of the reciprocation (i.e. the distance over which the scraper reciprocates) and the width of the teeth.

The teeth and/or recesses may be quadrilateral in shape. For example, the recesses may be in the form of a quadrilateral cut out. The scraping edge may have a castellated profile. The teeth and/or recesses may have tapered sides. The recesses may taper inwards away from the notional outer edge of the scraper. The teeth may taper outwards away from the notional outer edge of the scraper. The teeth and/or recesses may comprise a curved shape. The scraping edge may have an undulating profile. The teeth and/or recesses recess may be triangular in shape. Other arrangements of the scraping edge may be possible, for example the scraping edge may comprise a mixture of straight and curved surfaces which form the teeth and/or recesses. The teeth need not comprise a defined gap therebetween, in embodiments the teeth may run into each other, i.e. one tooth starts where the other ends. The distal ends of the teeth may all be aligned along the notional edge of the scraper. The recess may have a rhomboid or a parallelogram shape such that both sides of the recesses/teeth are angled in the same direction.

The scraper may comprise one or more detachable blades that provide the scraping edge. The detachable blades may each comprise teeth and recesses. The detachable blades may advantageously be replaced when they become worn or broken without having to replace the whole scraper. The position of the blades may be adjustable. The distance of the blades from the internal surface of the rotatable tube may be adjustable. The blades may comprise elongate holes for adjusting the distance of the blade from the internal surface of the tube. The blades may be fastened, for example bolted, onto the rest of the scraper using the elongate holes. The blades may be formed of carbon steel, preferably a high carbon steel. There may be gaps between the blades so as to allow for misalignment of the blades.

The internal surface of the rotatable tube may be smooth as between a first end of the rotatable tube and a second end of the rotatable tube. In other words, the internal surface of the rotatable tube may be straight, as between a first end of the rotatable tube and a second end of the rotatable tube, in a direction parallel to the longitudinal axis of the rotatable tube.

The rotatable tube may have a substantially circular cross section. The rotatable tube may be substantially cylindrical. The rotatable tube may be elongate. The length of the rotatable tube may greater than the diameter of the rotatable tube. The rotatable tube may have a length up to 30m. The rotatable tube may have a length up to 28m. The length of the rotatable tube may be more than 5m. The length of the rotatable tube may be between 8m and 20m; for example the length may be 10m. The rotatable tube may have an internal diameter between 0.5m and 5m, or between 1m and 3.5m; for example the internal diameter may be 2m.

The rotatable tube may be inclined such that the inlet end is elevated with respect to the outlet end. The incline may be at an angle between 1 degree and 30 degrees, or between 1 degree and 20 degrees; for example 10 degrees.

The balling machine may be arranged to produce balled process material having a mean particle size greater than 0.5mm, or greater than 1mm, or greater than 2mm, or greater than 5mm, or greater than 10mm. The balling machine may be arranged to produce balled material having a mean particle size less than 50mm, or less than 30mm, or less than 20mm, or less than 15mm, or less than 10mm, or less than 5mm, or less than 4mm. For example, the mean particle size may be between about 2mm and about 5mm. In another example, the process material may be formed into balls having an average particle size of between 2mm and 4mm. It may be possible to use the balling machine to simultaneously produce balled material having a range of particle sizes. The size may be measured by sieve analysis. Sieve analysis may comprise determining particle size by passing the balled material through a sieve having a mesh of known dimensions.

In another example, particularly one applicable to when the process material comprises fertilizer, the balling machine may be arranged to produce balled process material having a mean particle size of between 2mm and 4mm. The size of the balls of process material may depend, among other things, on the rotational speed of the rotatable tube and/or on the moisture content of the process material. The skilled person will be capable of adjusting these variables to achieve particle sizes within the desired range.

The term forming balls will be understood by the person skilled in the art to mean agglomerating particles of material. The agglomerates produced may be of a variety of cross-sectional shapes including, but not limited to, circular and oval. Forming balls may comprise binding of the material. The method of balling material may produce Hydraulically Bound Material (HBM). Forming balls may comprise pelletizing.

The term balling machine will be understood by the person skilled in the art to be a machine designed to agglomerate particles of material. Balling machines may also be referred to as manufactured aggregate machines, aggregate manufacturing machines, or pelletising machines. The balling machine may be useable in the manufacture of Hydraulically Bound Material (HBM).

The balling machine may be for use in the manufacture of aggregate. The balling machine may be for balling metallurgical waste material, for example steelworks and/or ironworks waste. The balls may be for reuse in the steelmaking and/or ironmaking process. The balling machine may be for use in the manufacture of a fertiliser product.

The present invention provides, according to a second aspect, a method of manufacturing a fertiliser product using a balling machine.

The balling machine comprises a rotatable tube arranged to receive a material therein and to rotate so as to cause the material to form balls (i.e. pellets); and a scraper arranged to control the build-up of the material on an inside surface of the rotatable tube, the scraper comprising a scraping edge. The scraping edge comprises a plurality of teeth and a plurality of recesses, the recesses being between the teeth, wherein the arrangement of the teeth and the recesses permit the material to build-up into a plurality of circumferential ridges on the inside surface of the rotatable tube.

The method comprises the steps of: providing a process material comprising fertiliser into the rotatable tube and rotating the rotatable tube so as to form pellets of the process material. A part of the process material builds-up on the internal/inside surface of the rotatable tube and is scraped by the scraper. The scraper controls the build-up such that the process material forms a plurality of circumferential ridges on the internal/inside surface of the rotatable tube. The method may also comprise a step of drying the pellets of the process material.

The method according to the second aspect may have any of the features as described in relation to the first aspect of the invention.

The present invention provides, according to a third aspect, balls of process material formable by performing the method according to the first or second aspect of the invention. The present invention may also provide a process material formed into balls by performing the method according to the first or second aspect of the invention.

The present invention provides, according to a fourth aspect, a balling machine comprising: a rotatable tube arranged to receive a material therein and to rotate so as to cause the material to form balls; and a scraper arranged to control the build-up of the material on an inside surface of the rotatable tube, the scraper comprising a scraping edge.

The scraping edge comprises a plurality of toothed regions and a plurality of non-toothed regions distributed along the length of the scraper, the toothed regions being spaced apart from each other by the non-toothed regions. The arrangement of the toothed regions and the non-toothed regions permits material to build-up on the inside of the rotatable tube into a plurality of circumferentially ridged regions and a plurality of non-ridged regions distributed along the length of the rotatable tube, the ridged regions being spaced apart from each other by the non-ridged regions.

It may be that between the teeth in each toothed region, the scraping edge is at a first distance from the inside surface of the rotatable tube; and within the non-toothed region, the scraping edge is at the first distance, or is less than the first distance, from the inside surface of the rotatable tube.

The balling machine may have any of the features as described in relation to the preceding aspects of the invention.

The present invention provides, according to a fifth aspect, a scraper for controlling the build-up of material on the inside surface of a rotatable tube of a balling machine, the scraper comprising a scraping edge.

The scraping edge comprises a plurality of toothed regions and a plurality of non-toothed regions distributed along the length of the scraper, the toothed regions being spaced apart from each other by the non-toothed regions.

The arrangement of the toothed regions and the non-toothed regions may permit, (when the scraper is arranged to control the build-up of material on the inside surface of the rotatable tube) in use, material to build-up on the inside of the rotatable tube into a plurality of circumferentially ridged regions and a plurality of non-ridged regions distributed along the length of the rotatable tube, the ridged regions being spaced apart from each other by the non-ridged regions.

The scraping edge may be arranged such that between the teeth in each toothed region the scraping edge is, in use, at a first distance from the inside surface of the rotatable tube. The scraping edge may be arranged such that within the non-toothed regions the scraping edge is, in use, at the first distance, or is less than the first distance, from the inside surface of the rotatable tube.

The scraper may have any of the features as described in relation to any preceding aspect of the invention. The balling machine may be a balling machine according to any preceding aspect of the invention.

The present invention provides, according to a further aspect of the invention, a balling machine comprising: a rotatable tube arranged to receive a material therein and to rotate so as to cause the material to form balls; and a scraper arranged to control the build-up of the material on an inside surface of the rotatable tube. The scraper comprises a scraping edge; wherein the scraping edge comprises a plurality of teeth and a plurality of recesses, the recesses being between the teeth, wherein the arrangement of the teeth and the recesses permit the material to build-up into a plurality of circumferential ridges on the inside surface of the rotatable tube. The inside surface of the rotatable tube has been coated with a coating material, the coating material having been scraped by the scraper so as to form a layer of coating material comprising a plurality of circumferential ridges on the inside surface of the rotatable tube.

The balling machine may have any of the features as described in relation to any preceding aspect of the invention. The balling machine may be formable by performing a method according to any preceding aspect of the invention.

It will be understood that descriptions relating to the profile of the scraping edge of the scraper can be used to deduce descriptions of the profile of the material permitted to build-up on the inside of the rotatable tube, and *vice versa.*

The term substantially regular intervals may be seen as encompassing regular intervals. The term substantially the same length may be seen as encompassing the same length. The term substantially regularly distributed may be seen as encompassing regularly distributed. The term substantially the whole length may be seen as encompassing the whole length. The term substantially the same maximum height may be seen as encompassing the same maximum height. The term substantially the same depth may be seen as encompassing the same depth. The term substantially equal to their width may be seen as encompassing equal to their width. The term substantially circular may be seen as encompassing circular. The term substantially cylindrical may be seen as encompassing cylindrical.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows a perspective side view of a balling machine for use in an embodiment of the invention;
Figure 2 shows a perspective front view of a scraper of the balling machine;
Figure 3 shows a perspective rear view of a portion of the scraper of the balling machine;
Figure 4 shows a second perspective front view of a portion of the scraper of the balling machine;
Figure 5 shows a face on view of a scraper blade of the scraper of the balling machine;
Figure 6 shows the steps of a method according to a first embodiment of the invention;
Figure 7 shows a cross sectional side view through a portion of the rotatable tube according to the first embodiment of the invention;
Figure 8 shows a cross sectional side view through the rotatable tube according to the first embodiment of the invention;
Figure 9 shows a face on view of a scraper blade according to a second embodiment of the invention;
Figures 10 shows a cross sectional side view through a portion of the rotatable tube according to the second embodiment of the invention;
Figure 11 shows the same view as Figure 10, with the rotatable tube itself omitted for clarity;
Figure 12 shows a face on view of a scraper blade according to a third embodiment of the invention;
Figure 13 shows a face on view of a scraper blade according to a fourth embodiment of the invention;
Figures 14 shows a cross sectional side view through a portion of the rotatable tube according to the fourth embodiment of the invention, with the rotatable tube itself omitted for clarity; and
Figure 15 shows a perspective view of a portion of a rotatable tube for a balling machine according to a fifth embodiment of the invention.

### Detailed Description

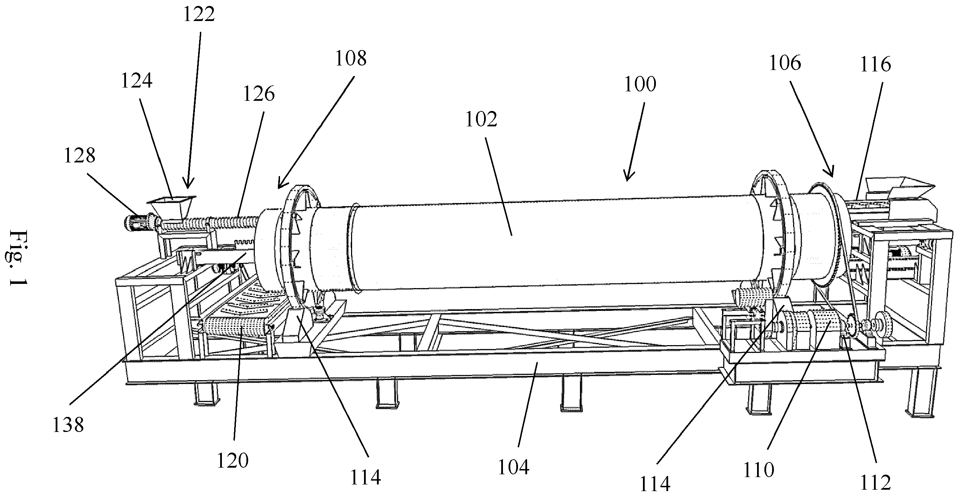

Figure 1 shows a balling machine 100 for use in an embodiment of the invention. The balling machine 100 comprises a rotatable tube 102 supported upon a frame 104. As can be seen the frame 104 is arranged so that the inlet end 106 of the rotatable tube 102 is elevated with respect to the outlet end 108. The rotatable tube 102 is inclined at an angle of approximately 7 degrees. Hydraulic jacks (not shown) are provided at either end of the frame 104 enabling the angle of inclination to be altered. A motor 110 is provided which, in use, drives a chain and sprocket system 112 which in turn drives rotational movement of the rotatable tube 102. Rollers 114 provided proximate either end of the rotatable tube 102 allow the rotatable tube 102 to rotate with respect to the frame 104.

At the inlet end 106 of the rotatable tube 102 an inlet conveyor 116 is provided. In use, a process material is deposited onto the inlet conveyor 116. Inlet conveyor 116 then transports the process material into the input end 106 of rotatable tube 102. Inlet conveyor 116 is driven by a motor provided adjacent to the conveyor. The inlet conveyor 116 terminates within the rotatable tube 102. In use, process material falls from the end of the conveyor into the rotatable tube 102.

Below the outlet end 108 of the rotatable tube 102 an exit conveyor 120 is provided. In use, balled material falls from the outlet end 108 of the rotatable tube 102 and onto the exit conveyor 120. The exit conveyor 120 is arranged to transport material away from the rotatable tube 102.

An input unit 122 for adding binder materials and/or absorber material is provided on the frame 104. The input unit 122 is in the form of a screw feeder. Input unit 122 comprises hopper 124 which feeds feed pipe 126. A screw is provided within the feed pipe 126 for transporting material along it. Motor 128 is provided at an end of the feed pipe 126 to drive the screw. Feed pipe 126 extends into the outlet end 108 of the rotatable tube 102 and substantially parallel to the rotatable tube 102. Feed pipe 102 is positioned proximate the top of the rotatable tube 102 in order to reduce the chance of interfering with the material being balled.

A liquid input device (not shown) for delivering fluid into the tube is also provided in the rotatable tube 102. The liquid input device comprises a pipe extending along the top of the rotatable tube 102, the pipe having a plurality of nozzles distributed along its underside for delivering liquid into the rotatable tube 102.

A scraper 138 is disposed within the rotatable tube 102. The scraper 138 extends substantially parallel to the longitudinal axis of the rotatable tube 102, along one side of the tube 102, and is proximate the internal surface of the tube rotatable 102. A motor is arranged to drive the scraper 138 in a reciprocating motion substantially parallel to the longitudinal axis of the rotatable tube 102.

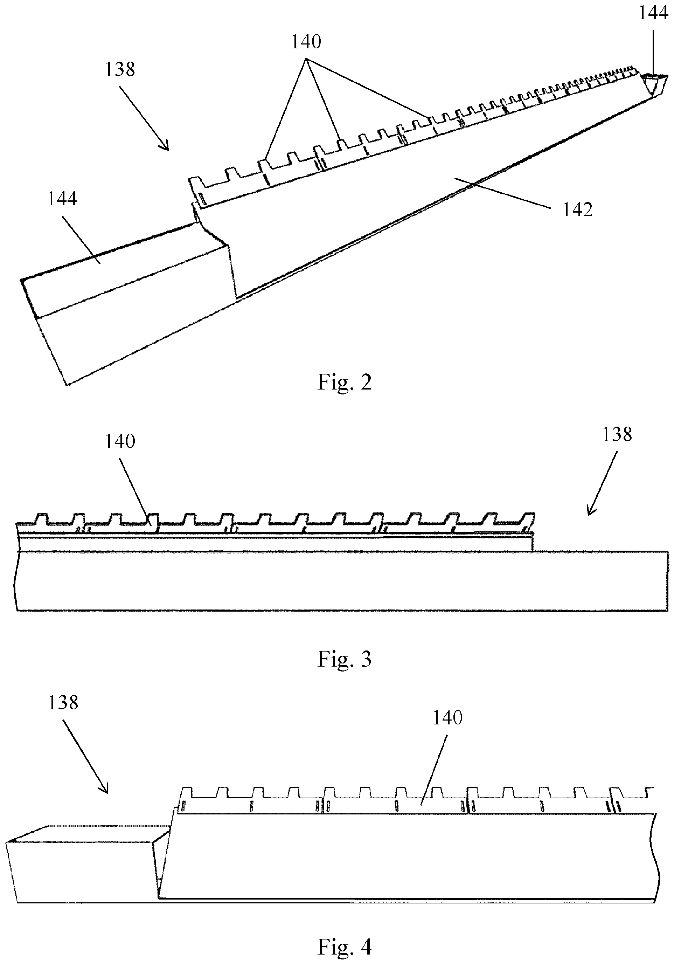

Figures 2 to 4 show the scraper 138 in isolation. The scraper 138 comprises an elongate body 142 and a plurality of scraper blades 140 detachably mounted to the elongate body 142. The elongate body 142 comprises a mounting portion 144 at each end for mounting to the reciprocating drive means. The square sections of the mounting portions 144 are captivated in a bearing cassette unit which facilitates the reciprocating movement. The scraper blades 140 together define a scraping edge of the scraper 138.

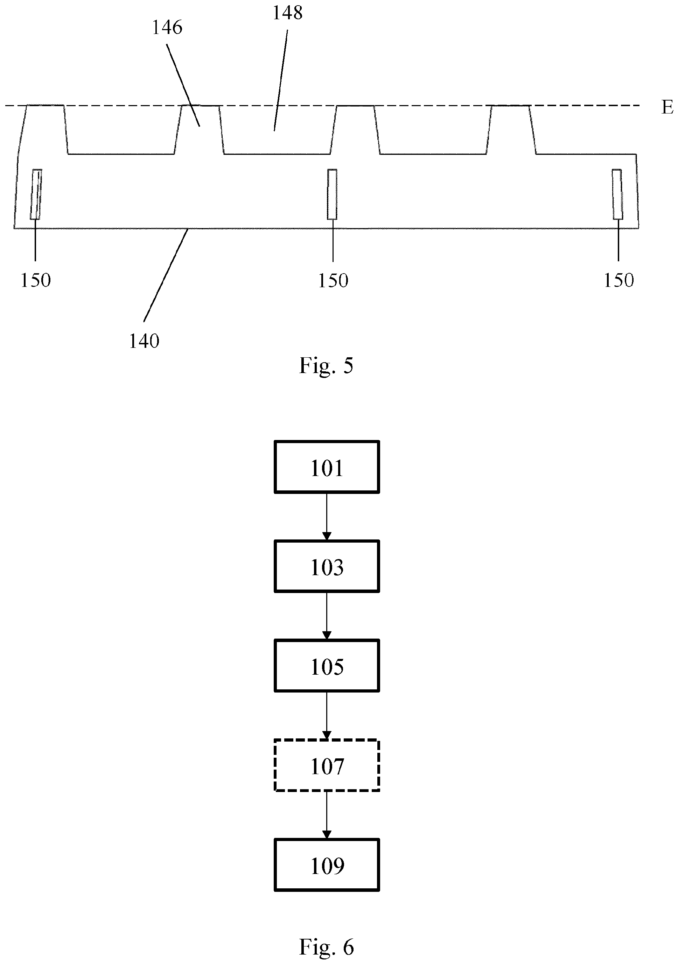

Figure 5 shows one of the scraper blades 140 in more detail. The scraper blade 140 comprises a plurality of teeth 146 and recesses 148 between the teeth 146. A notional edge E of the scraper is shown as a dashed line which extends across the distal ends of the teeth 146. The teeth 146 have side walls which taper outwards away from the notional edge E and consequently the sides of the recesses 148 taper inwards away from the notional edge E. The depth of the recesses can be measured from the notional edge E.

The scraper blade 140 further comprise three elongate holes 150 via which the scraper blade 140 is bolted to the elongate body 142. The elongate holes allow each scraper blade 140 to be repositioned on the elongate body 142 so as to allow the scraping edge to be moved towards and away from the internal surface of the rotatable tube 102.

Figure 6 shows the steps of a method according to a first embodiment of the invention. As a first step 101, the inside surface of the rotatable tube 102 is wetted with water. In embodiments, the liquid input device is used to perform this step. As a second step 103, performed whilst the inside surface is still wet, the inside surface of the rotatable tube is coated with a coating material 152. To perform this step, the coating material 152 is input into the inlet end 106 of the rotatable tube 102 via inlet conveyor 116. The coating material 152 comprises a cementitious material, for example Portland Cement, mixed with aggregate having a particle size up to 6mm. The rotatable tube 102 is rotated so as to spread the coating material 152 circumferentially around the inside surface of the rotatable tube 102.

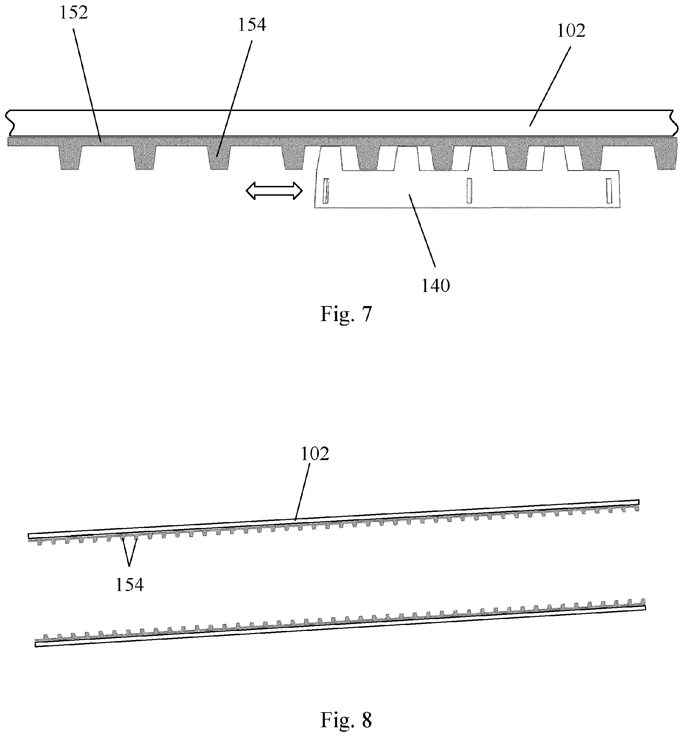

As shown in Figure 7, a layer of the coating material 152 builds-up on the inside surface of the rotatable tube 102. The layer of coating material increases in thickness until it interacts with the scraping edge of the scraper 138. The castellated shape of the scraping edge (i.e. the series of teeth 146 and the recesses 148) cause the coating material 152 to build-up into a series of circumferential ridges 154 on the internal surface of the rotatable tube 102. The scraper 138 reciprocates (oscillates) in a direction parallel to the longitudinal axis of the rotatable tube 102 thus forming spaces between the ridges 154. The height of the circumferential ridges 154 is approximately equal to the width at their base.

Figure 8 shows the full length of the rotatable tube 102 with the material built up into the circumferential ridges 154 on the inside surface. The scraper 138 is not shown for clarity. The circumferential ridges 154 are positioned at regular intervals along the rotatable tube 102.

As a third step 105 of the method, the coating material 152 is allowed to dry. The length of the drying process will of course depend on the composition of the coating material. In an example, the drying time may be one to two days.

As a fourth step 109 of the method, a process material is balled (i.e. pelletized) using the balling machine 100 which has been coated with the coating material 150. In one embodiment of the invention, the process material comprises polyhalite fertilizer mixed with starch and water. The starch acts as a binder.

In embodiments, the method comprises a step 107 of mixing together the constituents of the process material (in this case the fertilizer, the starch binder and the water) prior to providing the process material into the rotatable tube 102. In embodiment, the step 107 is performed in a paddle mixer.

The process material is input into the inlet end 106 of the rotatable tube 102 via inlet conveyor 116. The rotatable tube 102 is rotated so as to lift the process material up the side of the rotatable tube 102 and allow it to roll/tumble down the side. This motion causes the process material to agglomerate. The process material eventually forms into balls (i.e. pellets) which grow in size as they further gather material through the repeated rolling/tumbling motion.

As the rotatable tube 102 is rotated the balls of process material progress through the rotatable tube 102 under the influence of gravity due to the slight elevation of the inlet end 106 relative to the outlet end 108. The circumferential ridges 152 increase the contact area and friction between the process material and the internal surface of the tube 102. This helps lift the material higher up the sides of the rotatable tube 102 and encourage the material to roll down the side rather than sliding down in one mass. The balls of process material eventually makes their way out of the outlet end 108 of the rotatable tube 102 and fall onto the exit conveyor 120. The balls of process material are then allowed to dry.

In embodiments, the balls of process material are graded by size when they exit the rotatable tube and prior to drying. Balls which are above an upper threshold size and below a lower threshold size, for example above 4 mm and below 2 mm, are sent back to the mixer and used as an input for the mixing step 107. In embodiments, the balls of process material within the desired size range are provided into a heated rotatable drum for drying.

During the above process, a certain amount of the process material sticks to the layer of coating material 152 on the internal surface of the rotatable tube. The scraper 138 controls the build-up of the process material in order to maintain the circumferential ridge shape inside of the rotatable tube 102. Depending on how close the scraping edge of the scraper is to the layer of coating material 152, a thin layer of process material, which follows the profile of the coating material 152, may form inside the rotatable tube 102.

In an alternative embodiment of the invention, the process material comprises a byproduct from a steelmaking process, for example Hot Mill sludge (i.e. sludge from a Hot Mill), mixed with a cementitious material as a binder.

In embodiments, and depending on the composition of the process material, during balling of the process material water is sprayed into the rotatable tube 102 at a position proximate the inlet end 106. This can help to start the agglomeration process. In embodiments, the amount of water sprayed into the rotatable tube 102 is dependent on the moisture content of the process material within the rotatable tube.

In embodiments, and depending on the composition of the process material, the binder is added into the rotatable tube 102 via the input unit 122. In some embodiments, it is not necessary to add anything to the process material inside the rotatable tube 102, and thus the input unit 122 and/or liquid input device can be omitted.

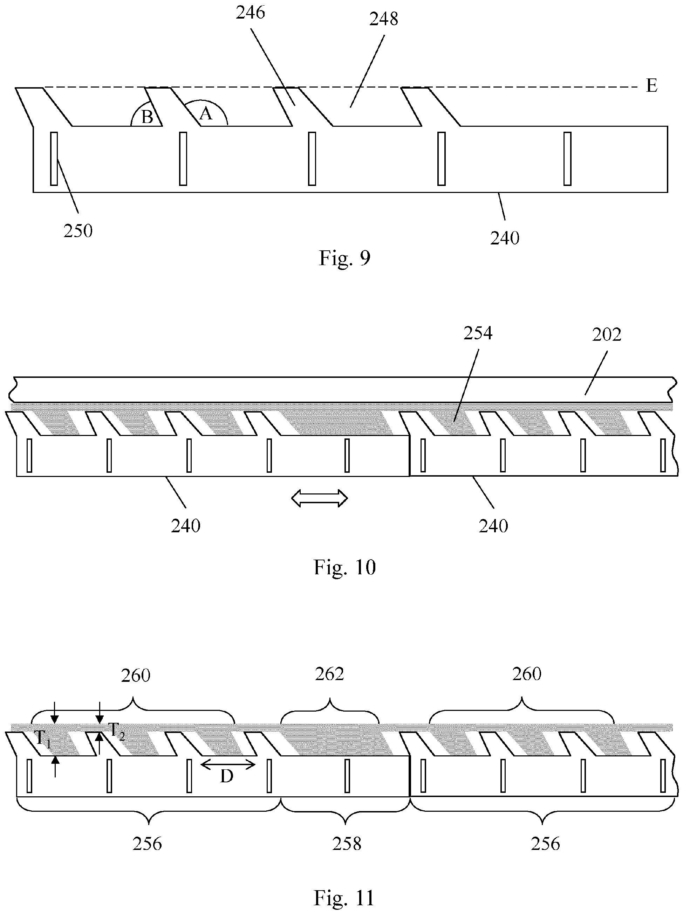

Figure 9 shows a scraper blade 240 for a balling machine according to a second embodiment of the invention. The scraper blade 240 comprises a plurality of teeth 246 and recesses 248 between the teeth 246. A notional edge E of the scraper is shown as a dashed line which extends across the distal ends of the teeth 246.

The scraper blade 240 comprise five elongate holes 250 via which the scraper blade 240 is bolted to the elongate body of a scraper, such as that shown in Figure 2. The elongate holes allow each scraper blade 240 to be repositioned on the elongate body so as to allow the scraping edge to be moved towards and away from the internal surface of a rotatable tube 202 of the balling machine.

The teeth 246 each comprise lateral sides which both slope in generally the same direction with respect to a longitudinal axis of the scraper blade 240. The upstream lateral side of the teeth 246 makes an obtuse angle A to the base of the recess 248 and the downstream side of the teeth 246 makes an acute angle B to the base of the recess 248. The distal end of the teeth 246 are also slightly narrower than the base of the teeth 246. The lateral sides therefore taper outwards away from the notional edge E.

Figure 10 shows two scraper blades 240 as they would be provided on the elongate body of the scraper. In use, the scraper blades 240 form a plurality of circumferential ridges 254 (e.g. of a coating material and/or a process material) having an upstream side which is at an acute angle to the internal surface of the rotatable tube 202, and a downstream side which is at an obtuse angle to the internal surface of the rotatable tube 202. This slows the progress of the balls through the rotatable tube 202 and thereby increases the residence time of the balls in the rotatable tube 202.

The teeth 248 of each scraper blade 240 are grouped together towards one side of the scraper blade 240, leaving a space on each scraper blade 240 where there are no teeth 246. In the embodiment shown, the arrangement is equivalent to there being a missing tooth at one end of the scraper blade 240. When the scraper blades 240 are positioned for use, the scraping edge of the scraper therefore comprises a plurality of toothed regions 256 and a plurality of non-toothed regions 258. See Figure 11. In the toothed regions 256, the scraping edge comprises a set of four of the teeth 246 which are equispaced, the teeth being spaced apart from each other by three of equal length recesses 248. In the non-toothed region 258, the scraping edge is straight.

In the embodiment shown, the toothed region 256 is approximately twice the length of the non-toothed region 258. The length of the toothed region 256 is the distance between the outermost lateral edges of the set of the regularly spaced teeth 246. The length of the non-toothed region 258 is the distance over which the scraping edge is straight, between the surrounding toothed regions 256. It will be appreciated that should one of the scraper blades 240 be provided at the end of the scraper, the length of the non-toothed region 258 would instead be defined between one adjacent toothed region 256 and the end of the scraper blade 240.

In the embodiment shown, the length of the non-toothed region 258 is between twice and two-and-a-half times the distance D between the teeth in the toothed regions 256. The distance between the teeth is the distance between opposing lateral sides of adjacent teeth 246, measured at the base of the recess 248.

The arrangement of the toothed regions 256 and non-toothed regions 258 mean that, in use, the material (e.g. coating material and/or process material) builds-up on the inside of the rotatable tube into a plurality of circumferentially ridged regions 260 and a plurality of non-ridged regions 262 distributed along the length of the rotatable tube 202, the ridged regions 260 being spaced apart from each other by the non-ridged regions 262. The presence of the non-ridged regions 262 may lead to an increase in collisions between the balls in the balling machine. This may aid compaction of the balls and/or have a polishing effect on the balls, whereby the balls become more rounded and smoother. It has been found that this arrangement may provide a more efficient balling process when fine process materials, such as fertilizer, are used.

In each toothed region 256, the base of each recess is at a first distance from the inside surface of the rotatable tube. This permits, in each ridged region 260, the material to build up to a first thickness T₁ at the distal end of each circumferential ridge. In each toothed region 256 the distal end of each tooth 246 is at a second distance from the inside surface of the rotatable tube. This permits, in each ridged region 260, the material to build up to a second thickness T₂ between the circumferential ridges 254. In each non-toothed region 258, the scraping edge is at the first distance, from the inside surface of the rotatable tube. This permits, in each non-ridged region 262, the material to build up to the first thickness T₁.

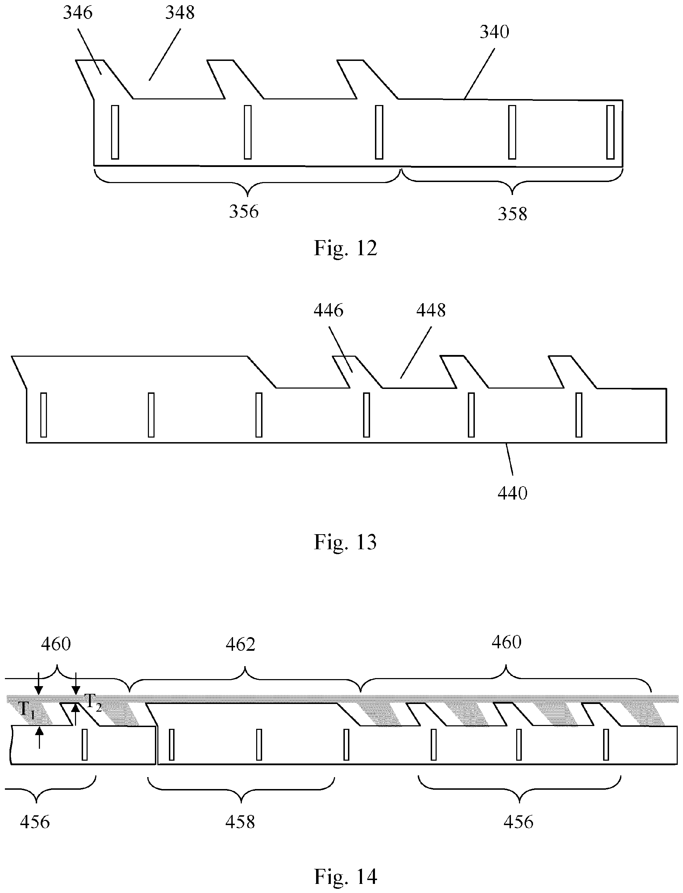

Figure 12 shows a scraper blade 340 for a balling machine according to a third embodiment of the invention. The scraper blade 340 is similar to the scraper blade 240 described above, except that the scraper blade is 340 is shorter and the toothed region comprises a set of only three equispaced teeth 346 and two recesses 348 there between. Accordingly, the ratio between the length of the toothed region 356 and non-toothed region 358 is different. In this embodiment, the toothed region 356 is approximately 40% longer than the non-toothed region 358.

Figures 13 and 14 show a scraper blade 440 for a balling machine according to a fourth embodiment of the invention. The scraper blade 440 is similar to the scraper blade 240 described above in that the scrape blade 440 comprises a plurality of teeth 446 and recesses 448 between the teeth 446. The teeth 446 each comprise lateral sides which both slope in generally the same direction with respect to a longitudinal axis of the scraper blade 440. The scraper blade 440 differs from the scraper blade 240 in that the scraper blade 440 is longer and defines a scraping edge having a different arrangement of toothed and non-toothed regions.

The toothed region 456 of the scraping edge comprises three equispaced teeth 446. In use, the toothed region permits the material to build up into a corresponding circumferentially ridged region 460 on the inside surface of the rotatable tube of the balling machine.

The non-toothed region 458 of the scraping edge comprises an elongate projection of the same height as a tooth 446. In the embodiment shown, the arrangement is equivalent to one there being two filled-in recesses at one end of the scraper blade 440.

The arrangement of the toothed regions 456 and non-toothed regions 458 mean that, in use, the material builds-up on the inside of the rotatable tube into a plurality of circumferentially ridged regions 460 and a plurality of non-ridged regions 462 distributed along the length of the rotatable tube.

In each non-toothed region 458, the scraping edge is at the second distance from the inside surface of the rotatable tube. This permits, in each non-ridged region 462, the material to build up to the second thickness T₂ from the inside surface of the rotatable tube.

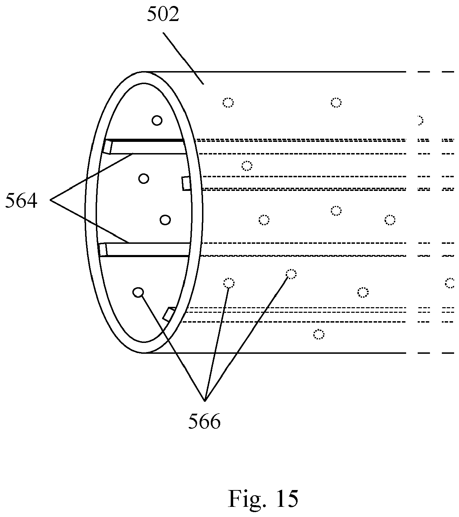

Figure 15 shows a portion of a rotatable tube 502 for a balling machine according to a fifth embodiment of the invention. The inside surface of the rotatable tube 502 is provided with a plurality of elongate projections 564 and spot projections 566. The elongate projections 564 comprise bars affixed to the inside surface. The bars extend lengthwise parallel to the longitudinal axis of the rotatable tube 502. The elongate projections 564 are provided at regular intervals around the circumference of the rotatable tube 502. In the embodiment shown, four elongate projections 564 are provided. In alternative embodiments, more or fewer elongate projections can be provided. The spot projections 566 comprise mounds of weld material deposited on the internal surface. The spot projections 566 are distributed across the internal surface of the rotatable tube 502. In the embodiment shown, the spot projections 566 are distributed randomly. In alternative embodiments, a regular distribution may be provided.

The projections 564, 566 provide a surface structure for the coating material to adhere to. The projections 564, 566 therefore help the coating material to build-up and stay on the inside surface of the rotatable tube 502. It will be appreciated that the scraper would need to be provided at a sufficient distance from the internal surface of the rotatable tube 502 that the scraper blades do not interact with the projections 564, 566. In alternative embodiments, only elongate projections or only spot projections are provided.

The balling machine described with reference to the second, third, fourth and fifth embodiments may have any of the features described in relation to the first embodiment of the invention, and may be used in the method according to the first embodiment of the invention (i.e. in which a coating material is used to coat the inside of the rotatable tube). Alternatively, the balling machine described with reference to the second, third, fourth and fifth embodiments may be used in a method where a separate coating material is not used to coat the drum.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the embodiments described above, the scraper comprises a single design of scraper blade, which is used all the way along the scraper. This may be beneficial, for example, to reduce manufacturing costs. However, in alternative embodiments, the scraper blades may have different designs. For example, some scraper blades could provide the non-toothed regions, and other scraper blades could provide the toothed regions.

In the embodiments described above, the scraping edge in the non-toothed region is at the first or second distance from the inside surface of the rotatable tube, and thereby permits the material in each non-ridged region to build-up to the first or second thickness from the inside surface of the rotatable tube. In an alternative embodiment, the scraping edge is arrange to permit the material to build-up to a thickness between the first and second thicknesses.

In embodiments where the process material only builds-up a negligable amount on the circumferentail ridges of the coating material, the scaper could be omitted during the balling of the process material.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of processing a material using a balling machine (100), wherein the balling machine (100) comprises:
a rotatable tube (102, 502) arranged to receive a material therein and to rotate so as to cause the material to form balls; and
a scraper (138) arranged to control the build-up of the material on an inside surface of the rotatable tube (102, 502), the scraper (138) comprising a scraping edge;
wherein the scraping edge comprises a plurality of teeth (146, 246, 346, 446) and a plurality of recesses (148, 248, 348, 448), the recesses (148, 248, 348, 448) being between the teeth (146, 246, 346, 446), wherein the arrangement of the teeth (146, 246, 346, 446) and the recesses (148, 248, 348, 448) permit the material to build-up into a plurality of circumferential ridges (154) on the inside surface of the rotatable tube (102, 502);
wherein the inside surface of the rotatable tube (102, 502) has been coated with a coating material (152), the coating material (152) having been scraped by the scraper (138) so as to form a layer of coating material (152) comprising a plurality of circumferential ridges (154) on the inside surface of the rotatable tube (102, 502);
the method comprising the steps of:
balling a process material, which is different from the coating material (152), by providing the process material into the rotatable tube (102, 502) which has been coated with the coating material (152), and rotating the rotatable tube (102, 502) so as to form balls of the process material.

2. A method according to claim 1, further comprising the steps of:
coating the inside surface of the rotatable tube (102, 502) by providing the coating material (152) into the rotatable tube (102, 502) and rotating the rotatable tube (102, 502);
wherein the coating material (152) builds-up on the inside surface of the rotatable tube (102, 502) and is scraped by the scraper (138); and
wherein the scraper (138) controls the build-up of the coating material (152) such that the coating material (152) forms the layer of coating material (152) comprising the plurality of circumferential ridges (154) on the inside surface of the rotatable tube (102, 502).

3. A method according to claim 2, further comprising a step of, prior to providing the coating material (152) into the rotatable tube (102, 502), wetting the inside surface of the rotatable tube (102, 502).

4. A method according to claims 2 or 3, comprising a step of allowing the layer of coating material (152) to dry before providing the process material into the rotatable tube (102, 502).

5. A method according to any preceding claim, wherein the process material comprises a fertiliser, optionally wherein the fertiliser comprises polyhalite.

6. A method according to any preceding claim, wherein the coating material (152) comprises a cementitious material, optionally wherein the coating material comprises an aggregate.

7. A method according to any preceding claim, wherein the inside surface of the rotatable tube (502) is provided with a plurality of projections (564, 566) on which the coating material (152) builds-up.

8. A method according to any preceding claim, wherein the scraper (138) reciprocates in a direction parallel to the longitudinal axis of the rotatable tube (102), 502).

9. A method according to any preceding claim, wherein the scraping edge comprises a plurality of toothed regions (256, 356, 456) and a plurality of non-toothed regions (258, 358, 458) distributed along the length of the scraper, the toothed regions (256, 356, 456) being spaced apart from each other by the non-toothed regions (258, 358, 458);
wherein the arrangement of the toothed regions (256, 356, 456) and the non-toothed regions (258, 358, 458) permits material to build-up on the inside of the rotatable tube (102, 502) into a plurality of circumferentially ridged regions (260, 460) and a plurality of non-ridged regions (262, 462) distributed along the length of the rotatable tube (102, 502), the ridged regions (260, 460) being spaced apart from each other by the non-ridged regions (262, 462);
optionally wherein the toothed regions (256, 356, 456) and/or non-toothed regions (258, 358, 458) are positioned at substantially regular intervals along the length of the scraper.

10. A method according to claim 9, wherein the teeth of each toothed region (256, 356, 456) are positioned at substantially regular intervals along the length of the scraper.

11. A method according to claim 9 or 10, wherein within each toothed region (256, 356, 456), the recesses (248, 348, 448) between the teeth have the same depth and/or width.

12. A method according to any of claims 9 to 11, wherein between the teeth in each toothed region (256, 356, 456), the scraping edge is a first distance from the inside surface of the rotatable tube (102, 502); and within the non-toothed region (258, 358, 458), the scraping edge is at the first distance, or is less than the first distance, from the inside surface of the rotatable tube (102, 502).

13. A method according to any of claims 9 to 12, wherein the scraping edge comprises at least three toothed regions (256, 356, 456) and at least three non-toothed regions (258, 358, 458).

14. A method according to any preceding claim, wherein the scraping edge is arranged such that a downstream lateral side of each tooth (246, 346, 446) is sloped so as to make an acute angle with respect to a longitudinal axis of the scraper, such than an upstream side of each circumferential ridge makes an acute angle with respect to the inside surface of the rotatable tube (102, 502).

15. A method of manufacturing a fertiliser product using a balling machine (100), the balling machine (100) comprising:
a rotatable tube (102, 502) arranged to receive a material therein and to rotate so as to cause the material to form pellets; and
a scraper (138) arranged to control the build-up of the material on the inside surface of the rotatable tube (102, 502), the scraper (138) comprising a scraping edge;
wherein the scraping edge comprises a plurality of teeth (146, 246, 346, 446) and a plurality of recesses (148, 248, 348, 448), the recesses (148, 248, 348, 448) being between the teeth (146, 246, 346, 446), wherein the arrangement of the teeth (146, 246, 346, 446) and the recesses (148, 248, 348, 448) permit the material to build-up into a plurality of circumferential ridges (154) on the inside surface of the rotatable tube (102, 502);
the method comprising the steps of:
providing a process material comprising fertiliser into the rotatable tube (102, 502) and rotating the rotatable tube (102, 502) so as to form pellets of the process material;
wherein a part of the process material builds-up on the inside surface of the rotatable tube (102, 502) and is scraped by the scraper (138);
wherein the scraper (138) controls the build-up such that the process material forms a plurality of circumferential ridges (154) on the inside surface of the rotatable tube (102, 502); and
optionally, drying the pellets of the process material.
